(19) Europäisches Patentamt
European Patent Office
Office européen des brevets

(11) Veröffentlichungsnummer: **0 585 654 A1**

# (12) EUROPÄISCHE PATENTANMELDUNG

(21) Anmeldenummer: **93112681.7**

(22) Anmeldetag: **07.08.93**

(51) Int. Cl.5: **C09B 29/36**, C09B 35/031, C09B 31/153

(30) Priorität: **20.08.92 DE 4227590**

(43) Veröffentlichungstag der Anmeldung:
**09.03.94 Patentblatt 94/10**

(84) Benannte Vertragsstaaten:
**CH DE FR GB IT LI**

(71) Anmelder: **BASF Aktiengesellschaft**
**Carl-Bosch-Strasse 38**
**D-67063 Ludwigshafen(DE)**

(72) Erfinder: **Dix, Johannes Peter, Dr.**
**Am Haengel 5**
**D-6719 Weisenheim(DE)**
Erfinder: **Hupfeld, Bernd, Dr.**
**Mausbergweg 6**
**D-6720 Speyer(DE)**
Erfinder: **Lamm, Gunther, Dr.**
**Heinrich-Heine-Strasse 7**
**D-6733 Hassloch(DE)**
Erfinder: **Reichelt, Helmut, Dr.**
**Johann-Gottlieb-Fichte-Strasse 56**
**D-6730 Neustadt(DE)**

(54) **Azofarbstoffe mit einer Kupplungskomponente aus der Reihe der N-(Hydroxysulfonylphenylalkyl)-pyridone.**

(57) Azofarbstoffe der Formel

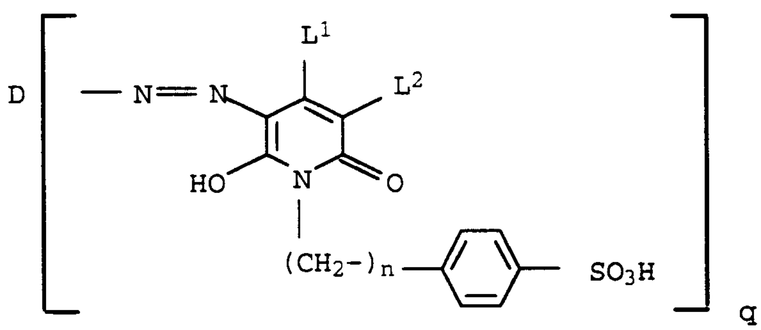

,

in der
n 1 bis 4
q 1 oder 2
$L^1$ Wasserstoff oder $C_1$-$C_3$-Alkyl,
$L^2$ Acetyl, Carbamoyl oder Hydroxysulfonyl und
D den Rest einer Diazokomponente bedeuten, sowie die Verwendung zum Färben von natürlichen oder synthetischen Substraten.

EP 0 585 654 A1

Die vorliegende Erfindung betrifft neue Azofarbstoffe der Formel I

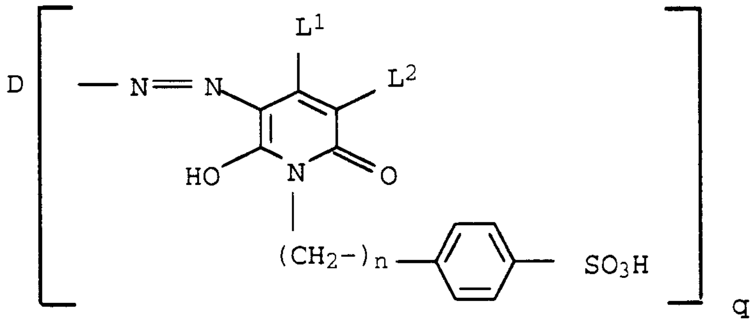

(I),

in der

n 1 bis 4,

q 1 oder 2,

$L^1$ Wasserstoff oder $C_1$-$C_3$-Alkyl,

$L^2$ Acetyl, Carbamoyl oder Hydroxysulfonyl und

D (für q = 1) einen Rest der Formel

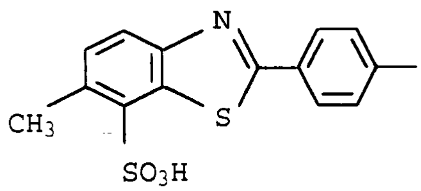

,

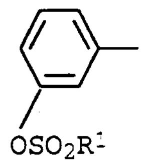

,

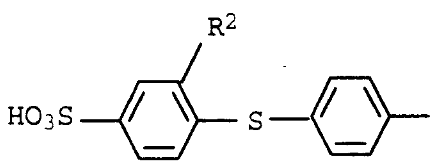

,

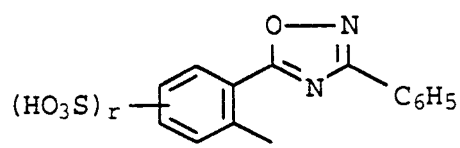

,

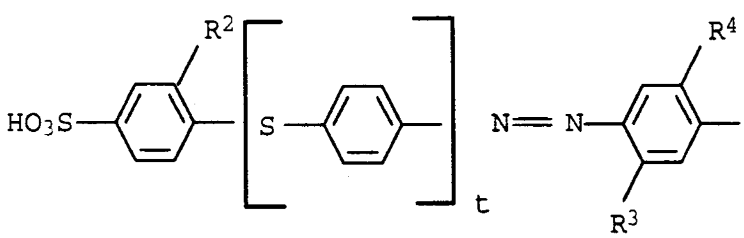

oder

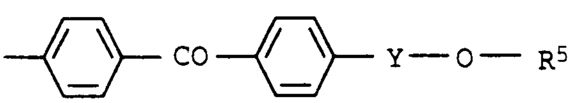

,

worin r für 0 oder 1, t für 0 oder 1, $R^1$ für Phenyl oder $C_1$-$C_4$-Alkylphenyl, $R^2$ für Wasserstoff oder Nitro, $R^3$ und $R^4$ unabhängig voneinander jeweils für Wasserstoff, $C_1$-$C_4$-Alkyl oder $C_1$-$C_4$-Alkoxy, $R^5$ für Wasserstoff oder $C_1$-$C_4$-Alkanoyl und Y für $C_1$-$C_4$-Alkylen stehen, oder (für q = 2) einen Rest der Formel

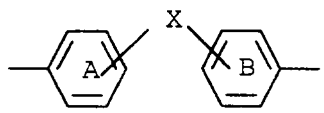

,

worin X für ein Brückenglied steht und Ringe A und B unabhängig voneinander substituiert sein können, wobei die Reste

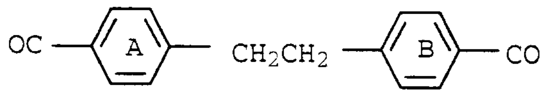

und

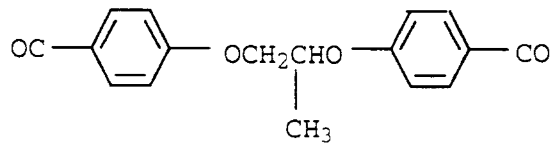

als Brückenglieder ausgenommen sind, bedeuten, sowie ihre Verwendung zum Färben von natürlichen oder synthetischen Substraten.

Die neuen Azofarbstoffe der Formel I können entweder in Form der freien Säure oder auch als Salze vorliegen.

Als Salze kommen dabei Metall- oder Ammoniumsalze in Betracht. Metallsalze sind insbesondere die Lithium-, Natrium- oder Kaliumsalze. Unter Ammoniumsalzen im erfindungsgemäßen Sinne sind solche Salze zu verstehen, die entweder unsubstituierte oder substituierte Ammoniumkationen aufweisen. Substituierte Ammoniumkationen sind z. B. Monoalkyl-, Dialkyl-, Trialkyl-, Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium-, Piperazinium- oder N-Alkylpiperaziniumkationen oder deren N-monoalkyl- oder N,N-dialkylsubstituierte Produkte. Unter Alkyl ist dabei im allgemeinen geradkettiges oder verzweigtes $C_1$-$C_{20}$-Alkyl zu verstehen, das durch Hydroxylgruppen substituiert und/oder durch 1 bis 4 Sauerstoffatome in Etherfunktion unterbrochen sein kann.

In der älteren Patentanmeldung WO 9 214 791 sind Farbstoffe ähnlicher Struktur beschrieben. Weiterhin beschreibt die DE-A-3 316 887 einen Azofarbstoff, dessen Kupplungskomponente 1-Hydroxysulfonylbenzyl-3-hydroxysulfonyl-4-methyl-6-hydroxypyrid-2-on und dessen Diazokomponente 2-Hydroxysulfonyl-4-ethoxyanilin ist.

Aufgabe der vorliegenden Erfindung war es nun, neue Azofarbstoffe bereitzustellen, die über 1-(Hydroxysulfonylphenylalkyl)-6-hydroxypyrid-2-one als Kupplungskomponente verfügen und die vorteilhafte anwendungstechnische Eigenschaften aufweisen.

Demgemäß wurden die eingangs näher bezeichneten Azofarbstoffe der Formel I gefunden.

Alle in der obengenannten Formel I auftretenden Alkyl- und Alkylengruppen können sowohl geradkettig als auch verzweigt sein.

Reste $L^1$, $R^3$ und $R^4$ sind z. B. Methyl, Ethyl, Propyl oder Isopropyl.

Reste $R^3$ und $R^4$ sind weiterhin z. B. Butyl, Isobutyl, sec-Butyl, Methoxy, Ethoxy, Propoxy, Isopropoxy, Butoxy, Isobutoxy oder sec-Butoxy.

Reste $R^1$ sind z. B. Phenyl, 2-, 3- oder 4-Methylphenyl oder 2-, 3- oder 4-Ethylphenyl.

Reste $R^5$ sind z. B. Formyl, Acetyl, Propionyl, Butyryl oder Isobutyryl.

Reste Y sind z. B. $-CH_2-$, $-(CH_2)_2-$, $-(CH_2)_3-$, $-(CH_2)_4-$, $-CH_2CH(CH_3)-$ oder $-CH(CH_3)CH(CH_3)-$.

Die Ringe A und B können beispielsweise durch $C_1$-$C_4$-Alkyl oder $C_1$-$C_4$-Alkoxy ein- oder zweifach substituiert sein.

Geeignete Brückenglieder X sind z. B. Sauerstoff, Schwefel oder ein Rest der Formel SO, $SO_2$, $C_2H_4$,

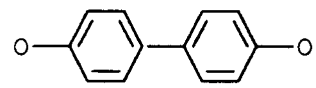 ,

$OC-NH-C_2H_4-NH-CO$, $OC-O-C_2H_4-O-CO$,

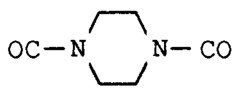 , 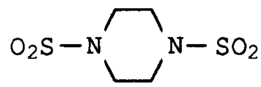 ,

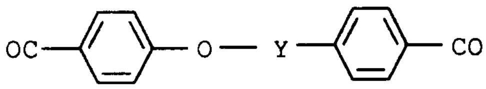 ,

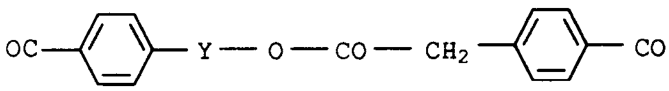 ,

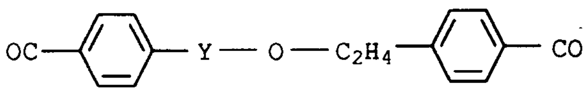 ,

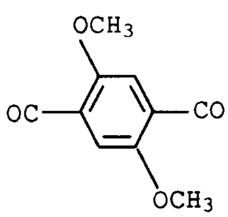 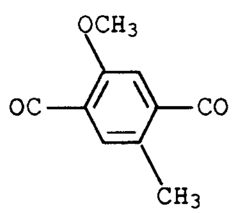 ,

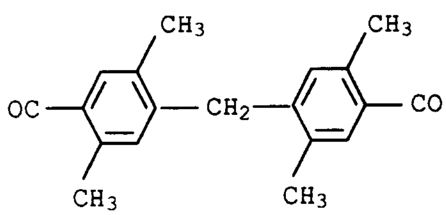 ,

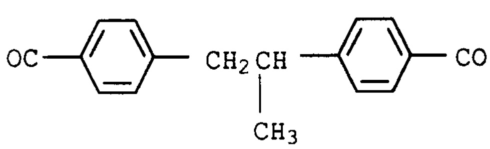 ,

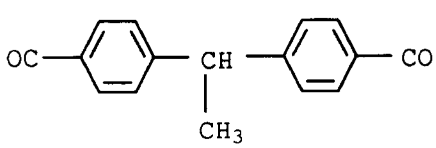 ,

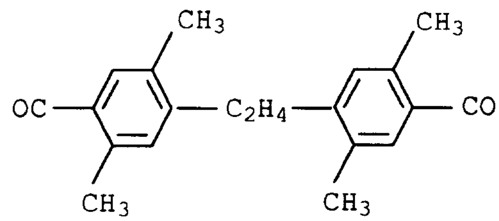

oder

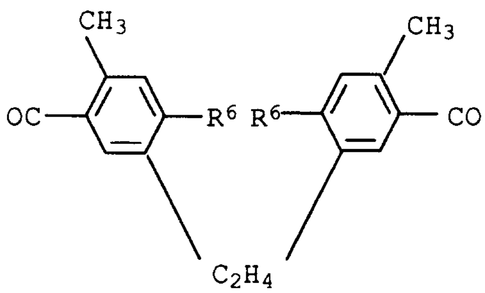

,

worin $R^6$ jeweils Wasserstoff oder Methyl bedeutet und Y jeweils die obengenannte Bedeutung besitzt.

Bevorzugt sind Azofarbstoffe der Formel I, in der n 1 oder 2 und $L^1$ Methyl bedeuten.

Bevorzugt sind weiterhin Azofarbstoffe der Formel I, in der $L^2$ Hydroxysulfonyl bedeutet.

Hervorzuheben sind Azofarbstoffe der Formel I, in der q 2 und D einen Rest der Formel

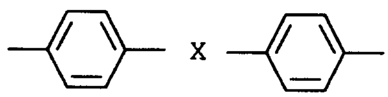

,

worin X die obengenannte Bedeutung besitzt, bedeuten.

Besonders zu nennen sind Azofarbstoffe der Formel I, in der X einen Rest der Formel

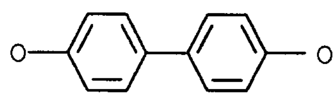

oder

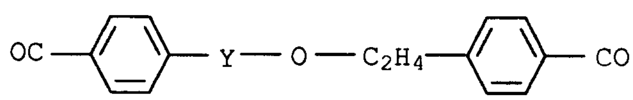

bedeutet, worin Y für $C_1$- oder $C_2$-Alkylen steht.

Weiterhin besonders zu nennen sind Azofarbstoffe der Formel I, in der X einen Rest der Formel

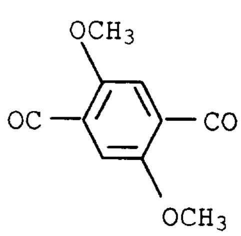

oder

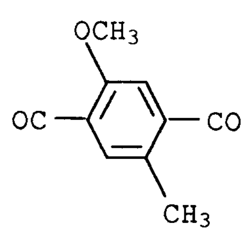

bedeutet.

Besonders zu nennen sind weiterhin Azofarbstoffe der Formel I, in der n 2 bedeutet.

Die erfindungsgemäßen Azofarbstoffe der Formel I können nach an sich bekannten Methoden erhalten werden. Beispielsweise kann man eine Diazokomponente der Formel III

$D(-NH_2)_w$ (III),

in der D die obengenannte Bedeutung besitzt und w 1 oder 2 bedeutet, diazotieren und mit einem Pyridon der Formel IV

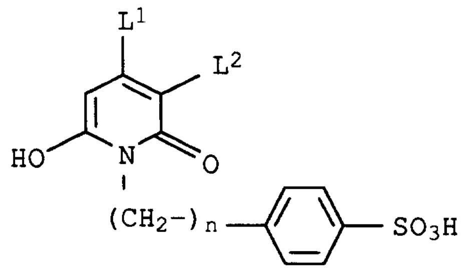

(IV),

in der n, $L^1$ und $L^2$ jeweils die obengenannte Bedeutung besitzen, kuppeln. Entsprechend der Anzahl w der Aminogruppen, wendet man dabei die Diazokomponente III und das Pyridon IV entweder äquimolar oder im Molverhältnis 1:2 an.

Die erfindungsgemäßen Azofarbstoffe der Formel I eignen sich in vorteilhafter Weise zum Färben von natürlichen oder synthetischen Substraten, beispielsweise von Wolle, Leder oder Polyamid. Man erhält Färbungen mit guten Gebrauchsechtheiten.

Sie eignen sich weiterhin für das Ink-Jet-Verfahren.

Die folgenden Beispiele sollen die Erfindung näher erläutern.

Beispiel 1

36,9 g der Verbindung der Formel

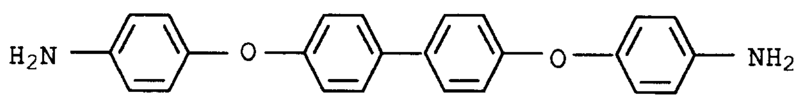

wurden mit 85 ml konz. Salzsäure, 25 ml Eisessig und 1 g eines sauer wirksamen Netzmittels angerührt. Dann kühlte man auf 0 °C ab gab 65 ml 23 gew.%ige wäßrige Natriumnitritlösung und wenig Eis hinzu und erhielt so eine klare Lösung, die 3,5 Stunden bei 0 bis 4 °C gerührt wurde. Danach zerstörte man überschüssige salpetrige Säure mit Amidosulfonsäure und ließ die Diazoniumsalzlösung in eine Lösung einlaufen, die wie folgt erhalten wurde:

78 g des Pyridons der Formel

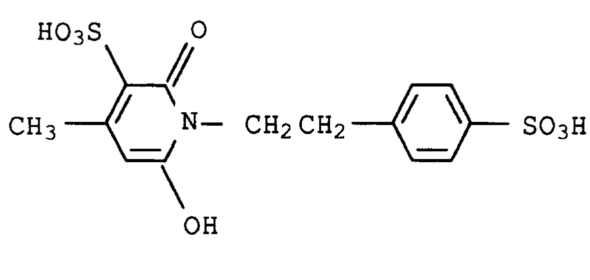

wurden in 350 ml Wasser mit Natronlauge bei einem pH-Wert von 7 gelöst. Dann kühlte man auf 10 °C ab.

Während die Diazoniumsalzlösung zulief, wurde das Reaktionsgemisch weiter gekühlt und mit Natronlauge zu einem pH-Wert von 4 bis 5 abgepuffert. Nach Beendigung der Kupplungsreaktion wurde vom Wasser befreit. Man erhielt 312 g eines Produkts, das 125 g des Farbstoffs der Formel

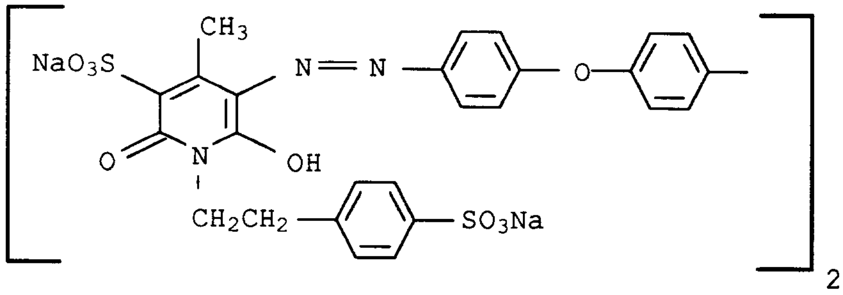

und 187 g Kochsalz enthielt.

Der Farbstoff löst sich im Wasser mit gelber Farbe und färbt Leder, Polyamid oder Wolle in kräftigem echten goldgelben Ton an.

In analoger Weise werden die im folgenden aufgeführten Farbstoffe erhalten.

Tabelle 1

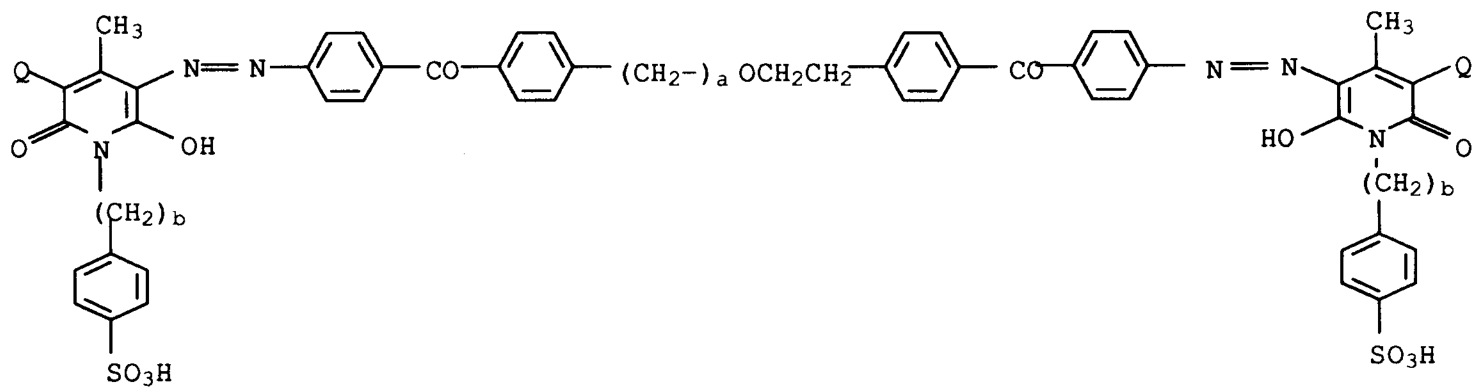

| Bsp. Nr. | b | a | Q | Farbton |
|---|---|---|---|---|
| 2 | 1 | 1 | $SO_3H$ | grünstichig gelb |
| 3 | 2 | 1 | $SO_3H$ | grünstichig gelb |
| 4 | 1 | 2 | $SO_3H$ | grünstichig gelb |
| 5 | 2 | 2 | $SO_3H$ | grünstichig gelb |
| 6 | 2 | 1 | $CONH_2$ | grünstichig gelb |
| 7 | 2 | 1 | $COCH_3$ | grünstichig gelb |
| 8 | 2 | 2 | $CONH_2$ | grünstichig gelb |
| 9 | 2 | 2 | $COCH_3$ | grünstichig gelb |

Tabelle 2

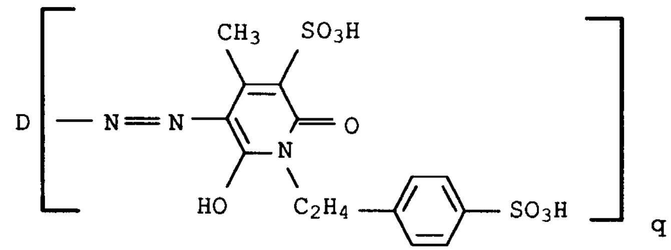

| Bsp. Nr. | D | q | Farbton auf Leder |
|---|---|---|---|
| 10 | 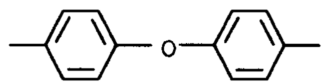 | 2 | goldgelb |
| 11 | 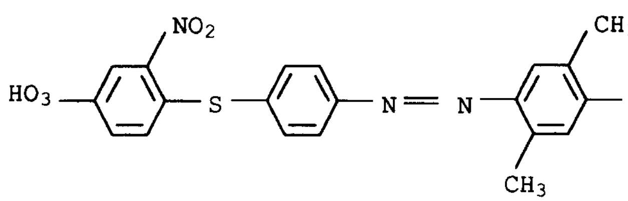 | 1 | rotorange |

| Bsp. Nr. | D | q | Farbton auf Leder |
|---|---|---|---|
| 12 | 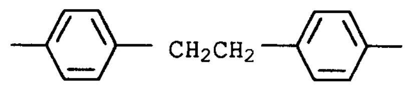 | 2 | gelb |
| 13 | 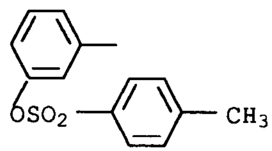 | 1 | gelb |
| 14 | 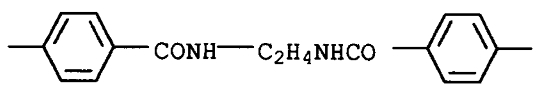 | 2 | gelb |
| 15 | 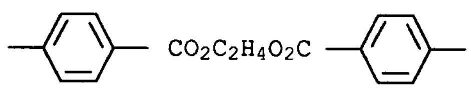 | 2 | gelb |

| Bsp. Nr. | D | q | Farbton auf Leder |
|---|---|---|---|
| 16 | 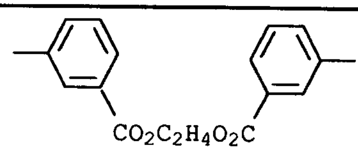 | 2 | stark grünstichig gelb |
| 17 | 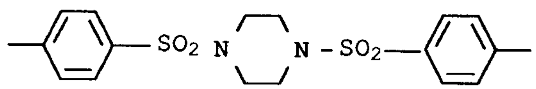 | 2 | grünstichig gelb |
| 18 | 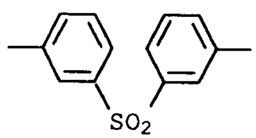 | 2 | grünstichig gelb |
| 19 | 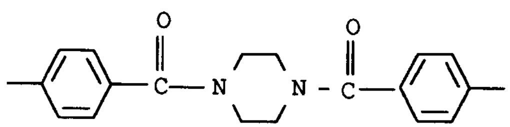 | 2 | grünstichig gelb |

| Bsp. Nr. | D | q | Farbton auf Leder |
|---|---|---|---|
| 20 | 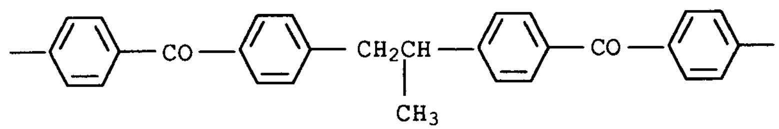 | 2 | gelb |
| 21 | 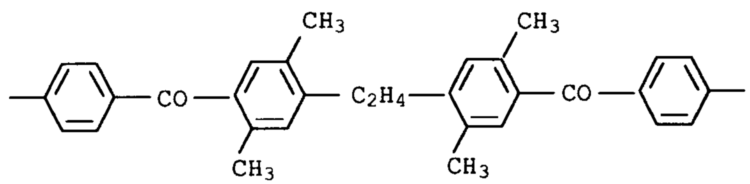 | 2 | gelb |
| 22 | 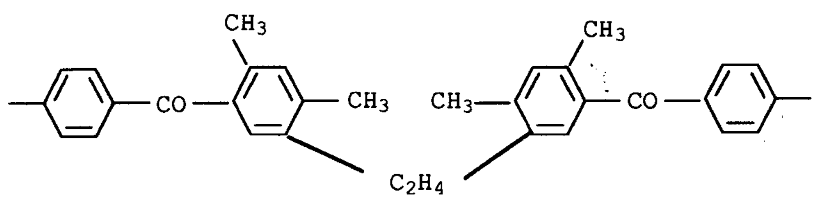 | 2 | gelb |

| Bsp. Nr. | D | q | Farbton auf Leder |
|---|---|---|---|
| 23 | 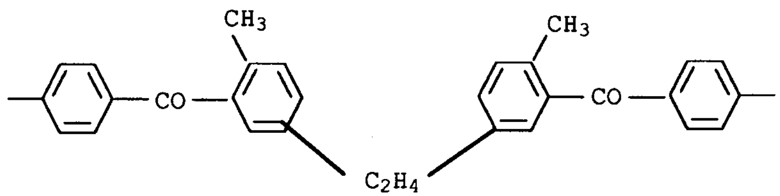 | 2 | gelb |
| 24 | 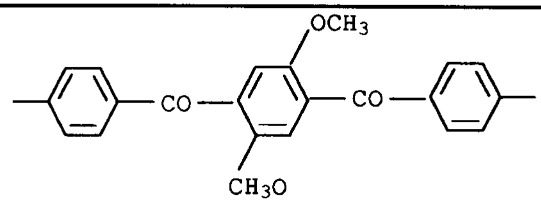 | 2 | |

Tabelle 3

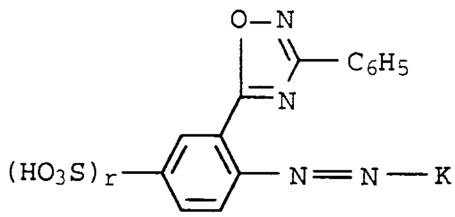

| Bsp. Nr. | r | K | Farbton |
|---|---|---|---|
| 25 | 0 | 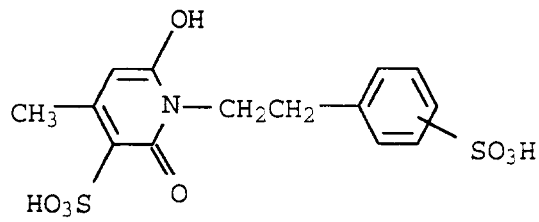 | gelb |
| 26 | 0 | 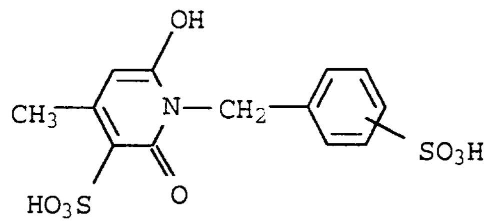 | gelb |
| 27 | 1 | 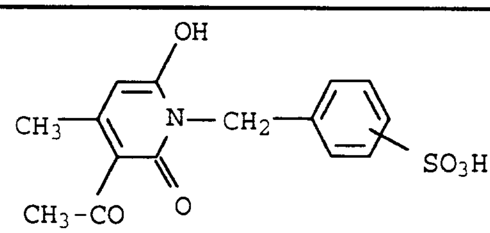 | gelb |
| 28 | 1 | 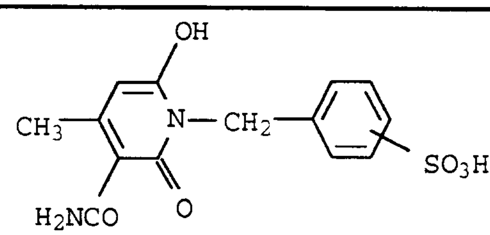 | gelb |
| 29 | 1 | 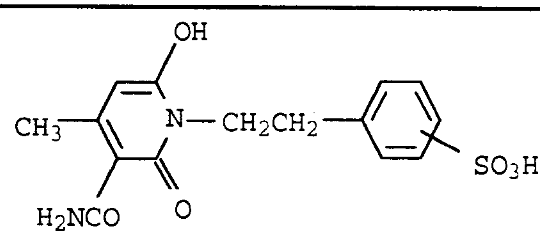 | gelb |

| Bsp. Nr. | r | K | Farbton |
|---|---|---|---|
| 30 | 1 | 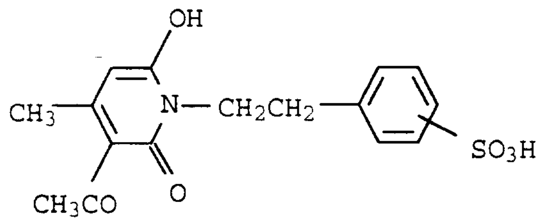 | gelb |

## Patentansprüche

**1.** Azofarbstoffe der Formel I

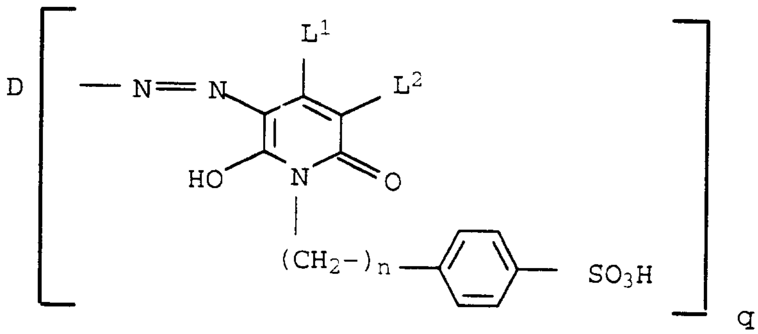

(I),

in der

n 1 bis 4,

q 1 oder 2,

$L^1$ Wasserstoff oder $C_1$-$C_3$-Alkyl,

$L^2$ Acetyl, Carbamoyl oder Hydroxysulfonyl und

D (für q = 1) einen Rest der Formel

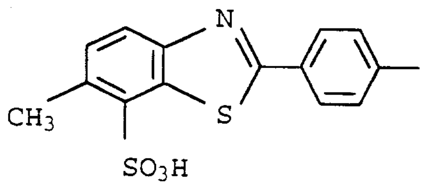 , 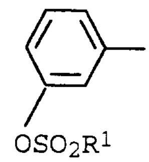 ,

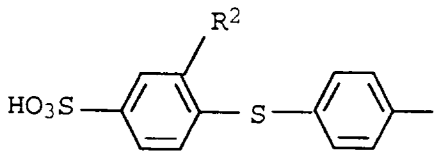 , 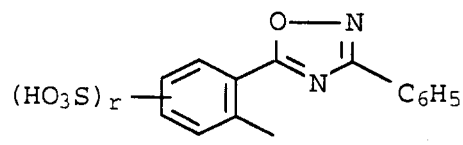 ,

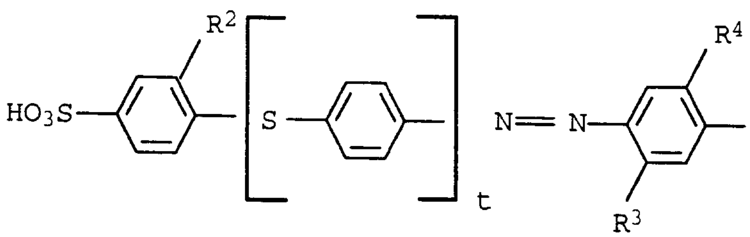 oder

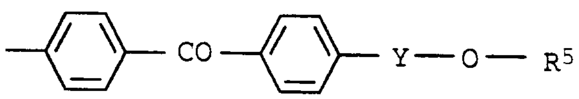 ,

worin r für 0 oder 1, t für 0 oder 1, $R^1$ für Phenyl oder $C_1$-$C_4$-Alkylphenyl, $R^2$ für Wasserstoff oder Nitro, $R^3$ und $R^4$ unabhängig voneinander jeweils für Wasserstoff, $C_1$-$C_4$-Alkyl oder $C_1$-$C_4$-Alkoxy, $R^5$ für Wasserstoff oder $C_1$-$C_4$-Alkanoyl und Y für $C_1$-$C_4$-Alkylen stehen, oder (für q = 2) einen Rest der Formel

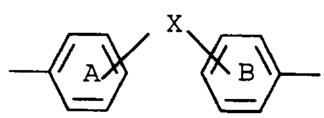

,

worin X für ein Brückenglied steht und Ringe A und B unabhängig voneinander substituiert sein können, wobei die Reste

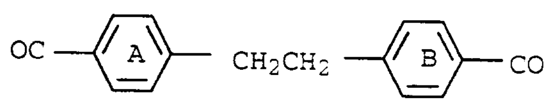 und

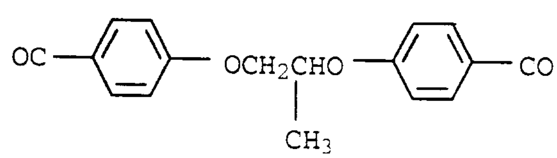

als Brückenglieder ausgenommen sind, bedeuten.

2. Azofarbstoffe nach Anspruch 1, dadurch gekennzeichnet, daß n 1 oder 2 und $L^1$ Methyl bedeuten.

3. Azofarbstoffe und Anspruch 1, dadurch gekennzeichnet, daß $L^2$ Hydroxysulfonyl bedeutet.

4. Azofarbstoffe nach Anspruch 1, dadurch gekennzeichnet, daß q 2 und D einen Rest der Formel

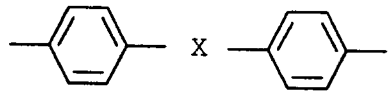

,

worin X die obengenannte Bedeutung besitzt, bedeuten.

5. Verwendung der Azofarbstoffe gemäß Anspruch 1 zum Färben von natürlichen oder synthetischen Substraten.

Europäisches Patentamt

# EUROPÄISCHER RECHERCHENBERICHT

Nummer der Anmeldung
EP 93 11 2681

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | DE-A-20 04 487 (BASF AG) | 1,2,5 | C09B29/36<br>C09B35/031<br>C09B31/153 |
| | * Beispiel 32 * | | |
| X | * Beispiele 43,44,47,213 * | 1,2,5 | |
| | * Beispiel 216 *<br>--- | | |
| X | FR-A-2 286 176 (CIBA-GEIGY AG)<br>* Ansprüche *<br>--- | 1,2,5 | |
| P,D,<br>A | WO-A-92 14791 (BASF AG) | 1-3,5 | |
| | * Beispiele 172,173 *<br>* Beispiele 174,175,188 *<br>* Beispiele 190,191,193 *<br>--- | | |
| A | EP-A-0 126 324 (AGFA-GEVAERT AG)<br>* Beispiel 14 * | 1-3 | |
| D | & DE-A-33 16 887<br>--- | | |
| A | EP-A-0 385 330 (BASF AG)<br>* Zusammenfassung *<br>--- | 1 | **RECHERCHIERTE SACHGEBIETE (Int.Cl.5)** |
| A | WO-A-86 01815 (SANDOZ AG)<br>* Anspruch 1; Beispiel 5 *<br>--- | 1-3,5 | C09B |
| A | EP-A-0 111 236 (BASF AG)<br>* Tabelle E *<br>--- | 1,2,5 | |
| A | FR-A-2 394 585 (BASF AG)<br>* Ansprüche; Beispiele 20,53,129 *<br>--- | 1,2,5 | |
| A | GB-A-2 016 501 (BASF AG)<br>* Beispiele *<br>--- | 1,5 | |
| A | FR-A-2 280 688 (ICI)<br>* Beispiele 26-42 *<br>--- | 1,2 | |
| A | DE-A-19 01 711 (SANDOZ AG)<br>* Beispiele 175,247 *<br>---<br>-/-- | 1 | |

Der vorliegende Recherchenbericht wurde für alle Patentansprüche erstellt

| Recherchenort | Abschlußdatum der Recherche | Prüfer |
|---|---|---|
| DEN HAAG | 25. November 1993 | Ketterer, M |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 93 11 2681

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | DE-A-18 17 977 (CASSELLA FARBWERKE MAINKUR AG)<br>* Tabellen *<br>--- | 1,2,5 | |
| A | DE-A-18 13 385 (CASSELLA FARBWERKE MAINKUR AG)<br>* Tabelle 1, Nr. 6; Tabelle 2, Nr. 3, Nr. 5 *<br>--- | 1,2,5 | |
| A | CH-A-526 677 (ICI)<br>* Ansprüche; Beispiel 26 *<br>--- | 1,5 | |
| A | EP-A-0 341 214 (SANDOZ AG)<br>* Seite 3, Zeile 60 *<br>----- | 1,2,5 | |
| | | | RECHERCHIERTE SACHGEBIETE (Int.Cl.5) |

Der vorliegende Recherchenbericht wurde für alle Patentansprüche erstellt

| Recherchenort | Abschlußdatum der Recherche | Prüfer |
|---|---|---|
| DEN HAAG | 25. November 1993 | Ketterer, M |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument